# DEMANDE DE BREVET EUROPEEN

(11) **EP 4 475 045 A1**
(43) Date de publication de la demande: **11.12.2024**
(21) Numéro de dépôt: 24180010.1
(22) Date de dépôt: 04.06.2024
(51) Int. Cl.: G06N 20/00

(54) **PROCÉDÉ DE GÉNÉRATION D'UN MODÈLE DE CLASSIFICATION ET PROCÉDÉ DE CLASSIFICATION UTILISANT UN TEL MODÈLE**

(30) Priorité: 09.06.2023 FR 2305829
(71) Demandeur: STMicroelectronics International N.V., 1228 Plan-les-Ouates, Geneva (CH)
(72) Inventeur: HUANG, He, 75011 Paris (FR)
(74) Mandataire: Casalonga

(57) **Abrégé**

Selon un aspect, il est proposé un procédé mis en oeuvre par ordinateur de génération d'un modèle de classification, le procédé comprenant :
- une obtention (20) d'au moins un groupe de données d'apprentissage,
- une définition (21) d'au moins une caractéristique à étudier des données d'apprentissage,
- une extraction (22) d'une valeur de chaque caractéristique définie pour l'ensemble des données d'apprentissage,
- une définition (23) de plages de valeurs pour chaque caractéristique à partir desdites valeurs extraites,
- une définition (24) d'un tableau de classification,
- une attribution (25) d'une classe à chaque case du tableau de classification en fonction d'un nombre d'occurrences des données d'apprentissage de chaque groupe selon leur valeur de chaque caractéristique extraite par rapport aux plages de valeurs définies pour chaque caractéristique étudiée,
- une génération (26) d'un modèle de classification comprenant ledit tableau de classification.

## Description

Des modes de réalisation et de mise en oeuvre concernent la classification de données.

Des ordinateurs peuvent utiliser des modèles de classification pour classer des données dans des catégories ou des groupes en fonction de certaines caractéristiques. Il existe plusieurs types de modèle de classification. Chaque type de modèle de classification présente ses propres avantages et inconvénients en fonction du type de données à classer.

Les modèles de classification incluent notamment les arbres de décision, les réseaux de neurones, les modèles de classification basés sur les voisins, telles que le k-plus proches voisins (KNN), et les machines à vecteurs de support (SVM).

Par ailleurs, les microcontrôleurs sont des circuits intégrés programmables qui peuvent être utilisés pour mettre en oeuvre des modèles de classification.

Cependant, les microcontrôleurs ont des limites en termes de ressources de mémoire et de puissance de calcul. En effet, les microcontrôleurs ont généralement une capacité de stockage de mémoire limitée. Les microcontrôleurs ont également une vitesse de traitement limitée.

Ces limites peuvent restreindre leur capacité à mettre en oeuvre certains modèles de classification.

Il convient de prendre en considération la taille et la complexité d'un modèle de classification ainsi que les ressources disponibles sur un microcontrôleur afin de déterminer s'il est possible et souhaitable d'utiliser le modèle de classification sur le microcontrôleur.

En particulier, les modèles de classification qui nécessitent beaucoup de stockage de données peuvent dépasser la capacité de stockage du microcontrôleur. En outre, les algorithmes de classification qui nécessitent beaucoup de calculs peuvent prendre beaucoup de temps pour être exécutés sur un microcontrôleur.

Ainsi, certains modèles de classification ne sont pas adaptés pour être utilisés par des microcontrôleurs. Les microcontrôleurs sont généralement mieux adaptés pour utiliser des modèles de classification simples.

Il existe donc un besoin de proposer une solution permettant de réaliser une classification de manière simple, rapide et peu coûteuse en occupation de la mémoire.

Selon un aspect, il est proposé un procédé mis en oeuvre par ordinateur de génération d'un modèle de classification, le procédé comprenant :
- une obtention d'au moins un groupe de données d'apprentissage, chaque groupe de données d'apprentissage étant associé à une classe indiquée,
- une définition d'au moins une caractéristique à étudier des données d'apprentissage,
- une extraction d'une valeur de chaque caractéristique définie pour l'ensemble des données d'apprentissage,
- une définition de plages de valeurs pour chaque caractéristique à partir desdites valeurs extraites,
- une définition d'un tableau de classification présentant un nombre de dimensions correspondant au nombre de caractéristiques étudiées, chaque dimension présentant une taille égale au nombre de plages de valeurs définies pour la caractéristique associée à cette dimension, chaque case du tableau de classification étant associée à une plage de valeurs de chaque caractéristique étudiée,
- une attribution d'une classe à chaque case du tableau de classification en fonction d'un nombre d'occurrences des données d'apprentissage de chaque groupe selon leur valeur de chaque caractéristique extraite par rapport aux plages de valeurs définies pour chaque caractéristique étudiée,
- une génération d'un modèle de classification comprenant ledit tableau de classification.

Un tel procédé de génération permet d'obtenir un modèle de classification simple et rapide à utiliser et occupant un espace relativement réduit en mémoire.

Un tel modèle de classification peut donc être utilisé par un système informatique comportant des ressources restreintes en termes de mémoire et de puissance de calcul. Un tel modèle de classification peut notamment être utilisé par un microcontrôleur.

Du fait que les classes sont attribuées à des plages de valeurs de chaque caractéristique étudiée, le modèle de classification est défini en évitant un surajustement (en anglais « overfitting ») aux données d'apprentissage, pour améliorer sa généralisation à des données qui n'ont pas été utilisées comme données d'apprentissage. Le nombre limité de plages de valeurs, qui est corrélé avec le nombre de données d'apprentissage, permet également d'éviter le surajustement.

Un tel modèle de classification peut également être mis en jour facilement en prenant en compte de nouvelles données d'apprentissage.

En outre, si les données d'apprentissage sont divisées en plusieurs groupes de tailles différentes, il est possible d'appliquer une pondération sur le nombre d'occurrences des données d'apprentissage utilisé lors de l'attribution des classes aux différentes cases du tableau de classification. Un tel procédé de génération de modèle de classification est donc adapté aux jeux de données d'apprentissage non équilibrés.

Dans un mode de mise en oeuvre avantageux, le modèle de classification comporte également une valeur minimale et une valeur maximale de chaque caractéristique étudiée. Un tel modèle de classification peut être stocké dans un espace relativement réduit en mémoire.

En variante, le modèle de classification peut comprendre l'ensemble des plages de valeurs pour chaque caractéristique.

De préférence, la classe attribuée à une case du tableau de classification correspond à la classe du groupe de données d'apprentissage ayant le nombre d'occurrences le plus élevé de données d'apprentissage sur la plage de valeurs de chaque caractéristique associée à ladite case du tableau de classification.

Dans un mode de mise en oeuvre avantageux, la classe attribuée à une case du tableau de classification correspond à la classe ayant une probabilité la plus importante par rapport aux classes attribuées aux cases adjacentes du tableau de classification si le nombre d'occurrences des données d'apprentissage sur la plage de valeurs de chaque caractéristique associée à ladite case est le même et non nul pour chaque groupe de données d'apprentissage.

Dans un mode de mise en oeuvre avantageux, la classe attribuée à une case du tableau de classification correspond à une classe indéterminée ou bien à la classe ayant une probabilité la plus importante par rapport aux classes attribuées aux cases adjacentes du tableau de classification si le nombre d'occurrences des données d'apprentissage sur la plage de valeurs de chaque caractéristique associée à ladite case est nul pour chaque groupe de données d'apprentissage.

De préférence, les plages de valeurs pour chaque caractéristique sont définies en utilisant la règle de Sturges.

Avantageusement, le procédé comprend en outre une élaboration d'un produit programme d'ordinateur de classification comprenant des instructions qui, lorsque le programme est exécuté par un ordinateur, conduisent celui-ci à mettre en oeuvre le modèle de classification généré.

Selon un autre aspect, il est proposé un produit programme d'ordinateur comprenant des instructions qui, lorsque le programme est exécuté par un ordinateur, conduisent celui-ci à mettre en oeuvre le procédé de génération d'un modèle de classification tel que décrit précédemment.

Selon un autre aspect, il est proposé système informatique comprenant :
- une mémoire comprenant un produit programme d'ordinateur comprenant des instructions qui, lorsque le programme est exécuté par un ordinateur, conduisent celui-ci à mettre en oeuvre le procédé de génération d'un modèle de classification tel que décrit précédemment,
- une unité de traitement configurée pour exécuter ledit produit programme d'ordinateur.

Selon un autre aspect, il est proposé un procédé mis en oeuvre par ordinateur de classification à partir d'un modèle de classification obtenu par un procédé de génération tel que décrit précédemment, le procédé de classification comprenant :
- une obtention de données à classifier,
- une extraction de valeurs des données à classifier pour chaque caractéristique définie dans le modèle de classification,
- une détermination de la classe des données à classifier à partir de la table de classification du modèle de classification indiquant la classe attribuée pour lesdites valeurs extraites.

Dans un mode de mise en oeuvre avantageux, le modèle de classification comporte une valeur minimale et une valeur maximale de chaque caractéristique étudiée. La classe attribuée pour lesdites données à classifier est alors trouvée dans le tableau de classification à partir desdites valeurs extraites des données à classifier, des valeurs minimale et maximale de chaque caractéristique étudiée et de la taille de chaque dimension du tableau de classification.

Selon un autre aspect, il est proposé un produit programme d'ordinateur comprenant des instructions qui, lorsque le programme est exécuté par un ordinateur, conduisent celui-ci à mettre en oeuvre le procédé de classification tel que décrit précédemment.

Selon un autre aspect, il est proposé un système informatique comprenant :
- une mémoire comprenant un produit programme d'ordinateur comprenant des instructions qui, lorsque le programme est exécuté par un ordinateur, conduisent celui-ci à mettre en oeuvre le procédé de classification tel que décrit précédemment,
- une unité de traitement configurée pour exécuter ledit produit programme d'ordinateur.

D'autres avantages et caractéristiques de l'invention apparaîtront à l'examen de la description détaillée de modes de réalisation, nullement limitatifs, et des dessins annexés sur lesquels :
[Fig 1]
[Fig 2]
[Fig 3]
[Fig 4]

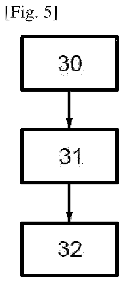

[Fig 5] illustrent des modes de réalisation et de mise en oeuvre de l'invention.

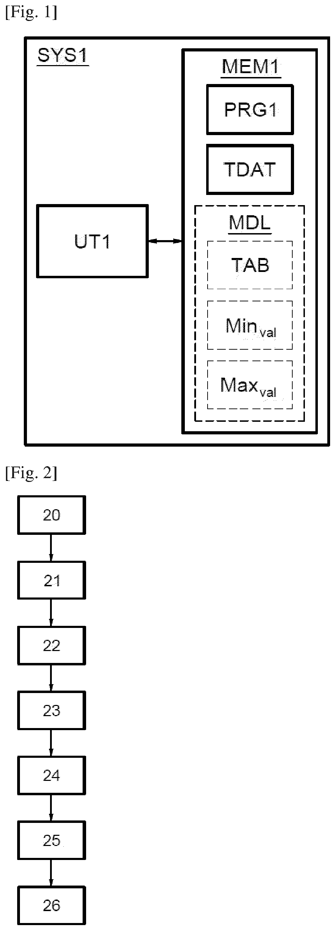

La figure 1 illustre un mode de réalisation d'un système informatique SYS1 configuré pour mettre en oeuvre un procédé de génération d'un modèle de classification.

Le système informatique SYS1 comprend une unité de traitement UT1 et une mémoire MEM1. Un tel système informatique SYS1 peut être un ordinateur personnel ou bien un serveur par exemple.

La mémoire MEM1 comporte un programme d'ordinateur PRG1 comprenant des instructions qui, lorsque le programme PRG1 est exécuté par l'unité de traitement UT1 du système informatique SYS1, conduisent celle-ci à mettre en oeuvre le procédé de génération d'un modèle de classification, tel que décrit dans la suite.

La mémoire MEM1 est également configurée pour stocker des données d'apprentissage TDAT. Les données d'apprentissage TDAT sont des données utilisées pour générer le modèle de classification MDL. Les données d'apprentissage TDAT sont fournies par un utilisateur du système informatique SYS1 souhaitant définir un modèle de classification à partir de ces données d'apprentissage TDAT. Les données d'apprentissage TDAT peuvent être obtenues à partir de données acquises par des capteurs puis fournies au système informatique SYS1. Les données TDAT peuvent par exemple correspondre à tout type de signal analogique ou numérique, par exemple des images, des signaux de vibration, des mesures de courant etc.

Les données d'apprentissage TDAT comportent des données associées à différentes classes. Une classe est un groupe de données qui ont des caractéristiques similaires et qui sont regroupées ensemble en fonction de ces caractéristiques. Ainsi, les données d'apprentissage sont divisées en plusieurs groupes de données d'apprentissage, chaque groupe de données d'apprentissage étant associé à une classe indiquée par l'utilisateur.

Plus particulièrement, les caractéristiques sont des mesures quantitatives ou des propriétés des données d'apprentissage qui permettent de les distinguer les unes des autres et de les associer à des classes particulières. Les données d'apprentissage peuvent correspondre directement à des caractéristiques.

Par exemple, les caractéristiques des signaux de série temporelle peuvent comprendre des amplitudes, des fréquences, des durées, des minimums, des maximums, des moyennes, des écart-types, etc.

Par exemple, un groupe de données d'apprentissage peut être associé à une classe correspondant à des données normales, et un autre groupe de données d'apprentissage peut être associé à une classe correspondant à des données d'anomalies.

L'unité de traitement UT1 est configurée pour générer un modèle de classification MDL en mettant en oeuvre ledit procédé de génération. En particulier, l'unité de traitement UT1 est configurée pour générer un modèle de classification MDL en exécutant le programme d'ordinateur PRG1 en prenant en entrée lesdites données de classification TDAT.

La figure 2 illustre un mode de mise en oeuvre d'un procédé de génération de modèle de classification pouvant être exécuté par un système informatique tel que décrit précédemment.

Le procédé comprend une obtention 20 de données d'apprentissage TDAT associées à différentes classes. Chaque classe est ainsi définie par un groupe de données d'apprentissage.

Le procédé comprend une définition 21 d'au moins une caractéristique des données d'apprentissage à étudier pour classifier les données d'apprentissage. En particulier, il est possible de définir une seule caractéristique à étudier ou bien plusieurs caractéristiques à étudier. Ces caractéristiques sont définies par l'utilisateur.

Le procédé comprend ensuite une extraction 22 des valeurs desdites caractéristiques pour les différentes données d'apprentissage. Si les données d'apprentissage correspondent directement à des caractéristiques, alors l'étape d'extraction 22 équivaut à une simple lecture des données d'apprentissage.

Le procédé comprend ensuite une définition 23 de plages de valeurs pour chaque caractéristique des données d'apprentissage. Ces plages de valeurs seront par la suite attribuées aux différentes classes.

En particulier, les plages de valeurs peuvent être définies par découpage des valeurs extraites des données d'apprentissage. Les plages de valeurs peuvent par exemple être définies en utilisant la règle de Sturges ou la règle de Freedman-Diaconis ou encore la règle de Scott, bien connues de l'homme du métier.

Le modèle de classification est défini à partir du nombre d'occurrences de données d'apprentissage par rapport aux différentes plages de valeurs définies.

Plus particulièrement, pour chaque classe de données d'apprentissage, un tableau d'occurrences est utilisé pour répertorier le nombre d'occurrences des données d'apprentissage de cette classe par rapport aux plages de valeurs définies pour chaque caractéristique étudiée.

Le tableau d'occurrences présente un nombre de dimensions égal au nombre de caractéristiques à étudier. Chaque dimension du tableau présente une taille correspondant aux nombres de plages de valeurs définies pour la caractéristique associée à cette dimension. Chaque case du tableau est associée à une plage de valeurs de chaque caractéristique étudiée. Chaque case permet de comptabiliser le nombre d'occurrences des données d'apprentissage de la classe associée à ce tableau d'occurrence par rapport aux plages de valeurs des caractéristiques associées à cette case.

Le nombre d'occurrences des données d'apprentissage par rapport audites plages de valeurs est répertorié dans le tableau d'occurrences en suivant la méthode suivante. Pour chaque donnée d'apprentissage, la valeur de chaque caractéristique étudiée extraite de cette donnée d'apprentissage est comparée aux plages de valeurs définies pour cette caractéristique afin de déterminer quelle case du tableau d'occurrences incrémenter.

Chaque tableau d'occurrences est stocké dans une mémoire du système informatique, par exemple une mémoire volatile du système informatique.

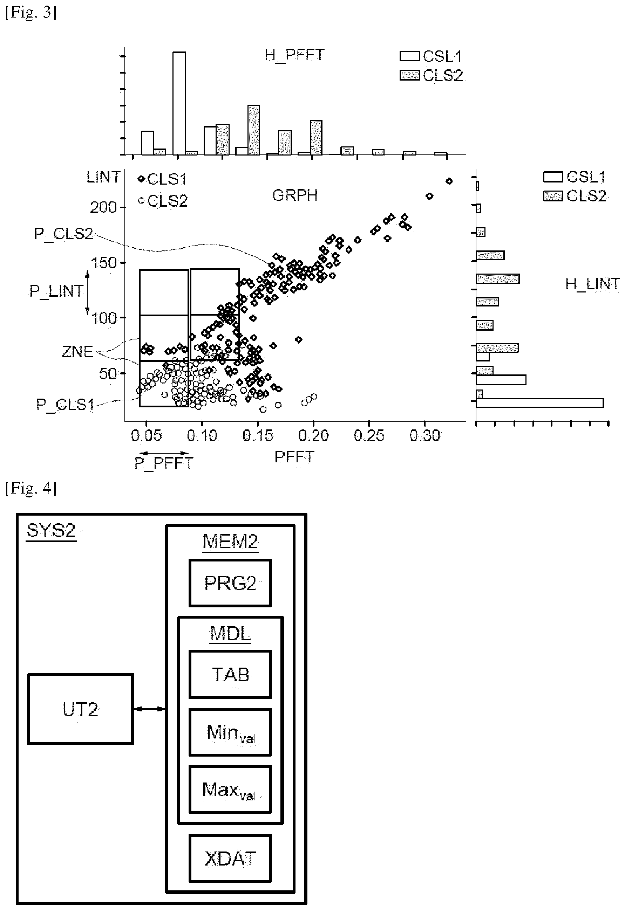

Lorsqu'une seule caractéristique est étudiée, chaque tableau d'occurrences peut être illustré par un histogramme comportant des barres (en anglais « bin ») associées aux différentes plages de valeurs définies. Chaque barre illustre alors le nombre d'occurrences de données d'apprentissage de la classe associée à cet histogramme pour la plage de valeurs de la caractéristique étudiée associée à cette barre. De tels histogrammes sont décrits dans la suite en relation avec la figure 3.

Le modèle de classification MDL à générer comprend un tableau de classification TAB. En particulier, le procédé comprend une définition 24 d'un tel tableau de classification TAB. Le tableau de classification TAB présente des dimensions qui correspondent aux caractéristiques définies. Chaque case du tableau de classification TAB est associée à une plage de valeurs pour les différentes caractéristiques définies.

Le procédé comprend une attribution 25 d'une classe à chaque case du tableau de classification. En particulier, une classe est attribuée à chaque case du tableau de classification en comparant les tableaux d'occurrences établis pour les différentes classes des données d'apprentissage.

La classe attribuée à une case correspond à la classe des données d'apprentissage pour laquelle un plus grand nombre d'occurrences desdites données d'apprentissage est présent dans les plages de valeurs définies pour cette case.

Si le nombre d'occurrences desdites données d'apprentissage sur la plage de valeurs de chaque caractéristique associée à ladite case est égal et non nul entre les différents groupes de données d'apprentissage, alors la case du tableau de classification TAB est associée à la classe qui a la probabilité d'occurrences la plus élevée en fonction de l'ensemble des données d'apprentissage. En particulier, la classe attribuée pour une telle case du tableau de classification peut être définie selon les classes attribuées aux cases adjacentes du tableau de classification.

Si le nombre d'occurrences des données d'apprentissage sur la plage de valeurs de chaque caractéristique associée à ladite case est nul pour chaque groupe de données d'apprentissage, alors la classe attribuée à la case du tableau de classification correspond à une classe indéterminée ou bien à la classe ayant une probabilité la plus importante par rapport aux classes attribuées aux cases adjacentes du tableau de classification.

Le procédé comprend ensuite une étape 26 de génération du modèle de classification. Le modèle de classification comprend le tableau de classification ainsi que la valeur minimale Minᵥₐₗ et la valeur maximale Maxᵥₐₗ de chaque caractéristique. En variante des valeurs minimale et maximale de chaque caractéristique, le modèle de classification peut comprendre l'ensemble des plages de valeurs définies pour chaque caractéristique.

Un tel procédé de génération permet d'obtenir un modèle de classification simple et rapide à utiliser et occupant un espace relativement réduit en mémoire.

Un tel modèle de classification peut donc être utilisé par un système informatique comportant des ressources restreintes en termes de mémoire et de puissance de calcul. Un tel modèle de classification peut notamment être utilisé par un microcontrôleur. En particulier, le modèle de classification peut être mis en oeuvre par un système informatique tel que celui décrit dans la suite en relation avec la figure 4.

Du fait que les classes sont attribuées à des plages de valeurs de chaque caractéristique étudiée, le modèle de classification est défini en évitant un surajustement (en anglais « overfitting ») aux données d'apprentissage, pour améliorer sa généralisation à des données qui n'ont pas été utilisées comme données d'apprentissage.

Un tel modèle de classification peut également être mis en jour facilement en prenant en compte de nouvelles données d'apprentissage.

En outre, si les données d'apprentissage sont divisées en plusieurs groupes de tailles différentes, il est possible d'appliquer une pondération sur le nombre d'occurrences des données d'apprentissage utilisé lors de l'attribution des classes aux différentes cases du tableau de classification. Un tel procédé de génération de modèle de classification est donc adapté aux jeux de données d'apprentissage non équilibrés.

La figure 3 illustre un graphique GRPH ainsi que des histogrammes H_PFFT et H_LINT pouvant être obtenus à partir des valeurs des caractéristiques de données d'apprentissage.

Ici, les données d'apprentissage correspondent à des signaux correspondant à des sons. Les caractéristiques définies pour ces données d'apprentissage sont des pics d'une transformation de Fourrier, notamment d'une transformation de Fourrier rapide PFFT, et des intégrales curvilignes LINT. Un premier groupe de données d'apprentissage est associé à une première classe CLS1. Un deuxième groupe de données d'apprentissage est associé à une deuxième classe CLS2.

En particulier, l'abscise du graphique GRPH correspond aux pics des transformations de Fourrier, notamment d'une transformation de Fourrier rapide, des données d'apprentissage. L'ordonnée du graphique correspond aux valeurs des intégrales curvilignes des données d'apprentissage.

Pour chaque donnée d'apprentissage associée à la classe CLS1 ou à la classe CLS2 est tracé un point sur le graphique selon la valeur du pic de transformée de Fourier et de l'intégrale curviligne associée à cette donnée d'apprentissage.

Les points P_CLS1 correspondent aux valeurs des caractéristiques des données d'apprentissage associées à la première classe CLS1.

Les points P_CLS2 correspondent aux valeurs des caractéristiques des données d'apprentissage associées à la deuxième classe CLS2.

L'histogramme H_PFFT illustre le nombre d'occurrences des données d'apprentissage de chaque classe CLS1, CLS2 selon la valeur de leurs pics de transformation de Fourier par rapport aux différentes plages de valeurs P_PFFT définies pour les barres de l'histogramme.

L'histogramme H_LINT illustre le nombre d'occurrences des données d'apprentissage de chaque classe CLS1, CLS2 selon la valeur des intégrales curvilignes par rapport aux différentes plages de valeurs P_LINT définies pour les barres de l'histogramme.

Si seules les valeurs de pics de transformation de Fourier PFFT sont utilisées pour générer le modèle de classification, alors le tableau de classification peut être défini à partir de l'histogramme H_PFFT selon le nombre d'occurrences des données d'apprentissage de chaque classe CLS1, CLS2 pour chaque barre de cet histogramme.

Si seules les valeurs des intégrales curvilignes LINT sont utilisées pour générer le modèle de classification, alors le tableau de classification peut être défini à partir de l'histogramme H_LINT selon le nombre d'occurrences des données d'apprentissage de chaque classe CLS1, CLS2 pour chaque barre de cet histogramme.

Pour améliorer les performances du modèle de classification, le modèle de classification peut être généré en prenant en considération les valeurs de pics de transformation de Fourier PFFT et les valeurs des intégrales curvilignes LINT. Dans ce cas, le tableau de classification peut être défini à partir du nombre d'occurrences des données d'apprentissage de chaque classe CLS1, CLS2 dans chaque zone ZNE du graphique GRPH ayant la taille de chaque plage de valeurs P_LINT et P_PFFT définies. Chaque zone ZNE étant alors associé à une case du tableau d'occurrences tel que défini précédemment.

La figure 4 illustre un mode de réalisation d'un système informatique SYS2 configuré pour mettre en oeuvre un procédé de classification utilisant le modèle de classification décrit.

Le système informatique SYS2 peut être un microcontrôleur, un ordinateur personnel ou un serveur par exemple.

Le système informatique SYS2 comprend une unité de traitement UT2 et une mémoire MEM2.

Le système informatique SYS2 comporte un programme d'ordinateur PRG2 comprenant des instructions qui, lorsque le programme est exécuté par l'unité de traitement UT2 du système informatique SYS2, conduisent celle-ci à mettre en oeuvre le procédé de classification décrit dans la suite. Ce programme d'ordinateur est stocké dans la mémoire MEM2.

Le système informatique SYS2 est configuré pour recevoir des données XDAT à classifier.

La figure 5 illustre un mode de mise en oeuvre d'un procédé de classification pouvant être exécuté par un système informatique SYS2 tel que décrit précédemment.

Le procédé comprend une obtention 30 de données XDAT à classifier.

Le procédé comprend ensuite une extraction 31 des valeurs des caractéristiques des données XDAT à classifier. Les caractéristiques des données à classifier correspondent aux caractéristiques définies pour établir le modèle de classification MDL.

Le procédé comprend ensuite une détermination 32 de la classe des données à classifier XDAT en utilisant le modèle de classification à partir des valeurs des caractéristiques extraites des données à classifier XDAT.

En particulier, la classe des données à classifier XDAT est déterminée à partir du tableau de classification TAB du modèle de classification MDL. En particulier, comme indiqué précédemment, chaque case du tableau de classification TAB est associée à une classe.

Les valeurs des caractéristiques extraites des données à classifier XDAT sont utilisées pour sélectionner une case du tableau de classification qui est associée aux plages des valeurs des caractéristiques qui comportent lesdites valeurs extraites. Cette case sélectionnée du tableau de classification TAB permet de renseigner la classe des données à classifier.

En particulier, la case du tableau de classification TAB peut être sélectionnée en utilisant les valeurs des caractéristiques extraites ainsi que les valeurs minimales et maximales Minᵥₐₗ et Maxᵥₐₗ des caractéristiques renseignées par le modèle de classification.

En particulier, les coordonnées de la case du tableau de classification TAB peut être obtenue en utilisant la formule suivante pour chaque caractéristique étudiée :
(*Datᵥₐₗ* - *Minᵥₐₗ*)/(*Maxᵥₐₗ* - *Minᵥₐₗ*/*N*), où *Datᵥₐₗ* correspond à la valeur de ladite caractéristique extraite des données à classifier, *Minᵥₐₗ* correspond à la valeur minimale de la caractéristique renseignée par le modèle de classification, *Maxᵥₐₗ* correspond à la valeur maximale de la caractéristique renseignée par le modèle de classification MDL, et *N* correspond au nombre de case du tableau de classification associées à cette caractéristique (c'est-à-dire le nombre de plages de valeurs définies pour cette caractéristique).

En variante, si le modèle de classification comprend l'ensemble des plages de valeurs définies pour chaque caractéristique lors de sa génération, la case du tableau de classification TAB peut être sélectionnée en comparant les valeurs des caractéristiques extraites aux plages de valeurs définies.

## Revendications

1. Procédé mis en oeuvre par ordinateur de génération d'un modèle de classification (MDL), le procédé comprenant :
- une obtention (20) d'au moins un groupe de données d'apprentissage (TDAT), chaque groupe de données d'apprentissage étant associé à une classe indiquée,
- une définition (21) d'au moins une caractéristique à étudier des données d'apprentissage (TDAT),
- une extraction (22) d'une valeur de chaque caractéristique définie pour l'ensemble des données d'apprentissage (TDAT),
- une définition (23) de plages de valeurs pour chaque caractéristique à partir desdites valeurs extraites,
- une définition (24) d'un tableau de classification (TAB) présentant un nombre de dimensions correspondant au nombre de caractéristiques étudiées, chaque dimension présentant une taille égale au nombre de plages de valeurs définies pour la caractéristique associée à cette dimension, chaque case du tableau de classification étant associée à une plage de valeurs de chaque caractéristique étudiée,
- une attribution (25) d'une classe à chaque case du tableau de classification (TAB) en fonction d'un nombre d'occurrences des données d'apprentissage de chaque groupe selon leur valeur de chaque caractéristique extraite par rapport aux plages de valeurs définies pour chaque caractéristique étudiée,
- une génération (26) d'un modèle de classification (MDL) comprenant ledit tableau de classification (TAB).

2. Procédé selon la revendication 1, dans lequel le modèle de classification (MDL) comporte également une valeur minimale (Minᵥₐₗ) et une valeur maximale (Maxᵥₐₗ) de chaque caractéristique étudiée.

3. Procédé selon l'une quelconque des revendications 1 ou 2, dans lequel la classe attribuée à une case du tableau de classification correspond à la classe du groupe de données d'apprentissage ayant le nombre d'occurrences le plus élevé de données d'apprentissage sur la plage de valeurs de chaque caractéristique associée à ladite case du tableau de classification.

4. Procédé selon l'une des revendications 1 à 3, dans lequel la classe attribuée à une case du tableau de classification correspond à la classe ayant une probabilité la plus importante par rapport aux classes attribuées aux cases adjacentes du tableau de classification si le nombre d'occurrences des données d'apprentissage sur la plage de valeurs de chaque caractéristique associée à ladite case est le même et non nul pour chaque groupe de données d'apprentissage.

5. Procédé selon l'une des revendications 1 à 4, la classe attribuée à une case du tableau de classification correspond à une classe indéterminée ou bien à la classe ayant une probabilité la plus importante par rapport aux classes attribuées aux cases adjacentes du tableau de classification si le nombre d'occurrences des données d'apprentissage sur la plage de valeurs de chaque caractéristique associée à ladite case est nul pour chaque groupe de données d'apprentissage.

6. Procédé selon l'une des revendications 1 à 5, dans lequel les plages de valeurs pour chaque caractéristique sont définies en utilisant la règle de Sturges.

7. Procédé selon l'une des revendications 1 à 6, comprenant en outre une élaboration d'un produit programme d'ordinateur de classification comprenant des instructions qui, lorsque le programme est exécuté par un ordinateur, conduisent celui-ci à mettre en oeuvre le modèle de classification généré.

8. Produit programme d'ordinateur comprenant des instructions qui, lorsque le programme est exécuté par un ordinateur, conduisent celui-ci à mettre en oeuvre le procédé selon l'une des revendications 1 à 7.

9. Système informatique comprenant :
- une mémoire comprenant un produit programme d'ordinateur selon la revendication 8,
- une unité de traitement configurée pour exécuter ledit produit programme d'ordinateur.

10. Procédé mis en oeuvre par ordinateur de classification à partir d'un modèle de classification obtenu par un procédé de génération selon l'une des revendications 1 à 7, le procédé de classification comprenant :
- une obtention (30) de données (XDAT) à classifier,
- une extraction (31) de valeurs des données à classifier (XDAT) pour chaque caractéristique définie dans le modèle de classification,
- une détermination (32) de la classe des données à classifier (XDAT) à partir de la table de classification du modèle de classification indiquant la classe attribuée pour lesdites valeurs extraites.

11. Procédé selon la revendication 10, dans lequel le modèle de classification (MDL) comporte une valeur minimale (Minᵥₐₗ) et une valeur maximale (Maxᵥₐₗ) de chaque caractéristique étudiée, et dans lequel la classe attribuée pour lesdites données à classifier est trouvée dans le tableau de classification à partir desdites valeurs extraites des données à classifier, des valeurs minimale et maximale de chaque caractéristique étudiée et de la taille de chaque dimension du tableau de classification (TAB).

12. Produit programme d'ordinateur comprenant des instructions qui, lorsque le programme est exécuté par un ordinateur, conduisent celui-ci à mettre en oeuvre le procédé selon l'une des revendications 10 ou 11.

13. Système informatique comprenant :
- une mémoire comprenant un produit programme d'ordinateur selon la revendication 12,
- une unité de traitement configurée pour exécuter ledit produit programme d'ordinateur.
